(19) **Europäisches Patentamt**
**European Patent Office**
**Office européen des brevets**

(11) **EP 1 514 268 B1**

(12) **EUROPEAN PATENT SPECIFICATION**

(45) Date of publication and mention
of the grant of the patent:
**11.03.2009 Bulletin 2009/11**

(51) Int Cl.:
***G11B 20/00*** (2006.01)

(21) Application number: **03727841.3**

(86) International application number:
**PCT/IB2003/002319**

(22) Date of filing: **21.05.2003**

(87) International publication number:
**WO 2003/102947 (11.12.2003 Gazette 2003/50)**

(54) **RE-EMBEDDING OF WATERMARKS IN MULTIMEDIA SIGNALS**

WIEDEREINBETTUNG VON WASSERZEICHEN IN MULTIMEDIASIGNALEN

REINSERTION DE FILIGRANES DANS DES SIGNAUX MULTIMEDIA

(84) Designated Contracting States:
**AT BE BG CH CY CZ DE DK EE ES FI FR GB GR HU IE IT LI LU MC NL PT RO SE SI SK TR**

(30) Priority: **03.06.2002 EP 02077170**

(43) Date of publication of application:
**16.03.2005 Bulletin 2005/11**

(73) Proprietor: **Koninklijke Philips Electronics N.V.**
**5621 BA Eindhoven (NL)**

(72) Inventors:
 • **LEMMA, Aweke, N.**
   **NL-5656 AA Eindhoven (NL)**
 • **APREA, Javier, F.**
   **NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**EP-A- 1 148 408          WO-A-02/25662**
**US-A1- 2002 149 976**

• **PIVA A ET AL: "Managing copyright in open networks" IEEE INTERNET COMPUTING, MAY-JUNE 2002, IEEE, USA, vol. 6, no. 3, pages 18-26, XP002255464 ISSN: 1089-7801**
• **VEEN VAN DER M ET AL: "ROBUST, MULTI-FUNCTIONAL AND HIGH-QUALITY AUDIO WATERMARKING TECHNOLGOY" PREPRINTS OF PAPERS PRESENTED AT THE AES CONVENTION, vol. 110, no. 5345, 12 May 2001 (2001-05-12), pages 1-9, XP001086463**
• **LEMMA A N ET AL: "A temporal domain audio watermarking technique" IEEE TRANSACTIONS ON SIGNAL PROCESSING, IEEE, INC. NEW YORK, US, vol. 51, no. 4, April 2003 (2003-04), pages 1088-1097, XP002242882 ISSN: 1053-587X**

## EP 1 514 268 B1

**Description**

The present invention relates to apparatus and methods for re-embedding information in multimedia signals, such as audio, video or data signals.

Watermarking of multimedia signals is a technique for the transmission of additional data along with the multimedia signal. For instance, watermarking techniques can be used to embed copyright and copy control information into audio signals.

The main requirement of a watermarking scheme is that it is not observable (i.e. in the case of an audio signal, it is inaudible) whilst being robust to attacks to remove the watermark from the signal (e.g. removing the watermark will damage the signal). It will be appreciated that the robustness of a watermark will normally be a trade off against the quality of the signal in which the watermark is embedded. For instance, if a watermark is strongly embedded into an audio signal (and is thus difficult to remove) then it is likely that the quality of the audio signal will be reduced, if one tries to remove it without the knowledge of the underlying technique and the secret key.

The altering of a watermark by increasing the amount of embedded information in a watermark signal is known. In such instances, an extra watermark sequence is added to an existing watermarked signal. This is, for instance, implied in the 4C 12 bit watermark specification. A copy of this specification can be found at http://www.4centity.com/data/tech/4cspec.pdf.

It will be appreciated that when the watermark information needs to be changed repeatedly, such an approach not only degrades the quality of the original information signal (as additional watermark signals are added to change the payload) but also collisions between the individual embedded watermarks significantly degrade the watermark robustness. For example, certain applications of copyright require that the copyright information embedded in a signal is changed repeatedly in order to assert proper copy control.

US2002/0149976 describes a method for controlling the reproduction of information signals. It is explained that watermarks may be embedded within information signals. The watermarks include copy management information indicating whether copies can be made, and how many copies can be made. It is explained that copy management information included in a watermark may be modified when a copy of an information signal is made.

Piva et al: "Managing Copyright in Open Networks", IEEE Internet Computing May - June 2002, IEEE, USA, Vol. 6, no. 3, pages 18 - 26 describes a method for integrating cryptography with watermarking techniques so as to more robustly protect digital content.

Van Der Veen et al "Robust Multi-functional and High Quality Audio Watermarking Technology", preprints of papers presented at the AES Convention, vol.110, no. 5345, 12th May 2001 describes a robust high quality audio watermarking technique. An embedding algorithm operates in the frequency domain and magnitudes Fourier coefficients are slightly modified. Watermark detection relies on cross correlation techniques.

WO02/25662 describes a method for distributing digital content. A spoiler is added to the content to obtain spoiled content and the spoiled content is distributed. Information is provided indicating how to remove the spoiler from the spoiled content.

EP 1148408 discloses how to remove a watermark and embed a new one in order to avoid impairment of the quality of the original content due to overwriting.

It is an object of the present invention to provide a watermarking scheme that substantially addresses at least one of the problems of the prior art, whether referred to herein or otherwise.

To that end, the present invention provides a method of and apparatus for processing a multimedia signal as defined in the independent claims. Advantageous embodiments of the invention are defined in the dependent claims.

For a better understanding of the invention, and to show how embodiments of the same may be carried into effect, reference will now be made, by way of example, to the accompanying diagrammatic drawings in which:

Figure 1 is a diagram illustrating a generalized watermark re-embedding apparatus according to a first embodiment of the present invention;

Figure 2 shows a schematic diagram of one type of watermark embedder;

Figure 3 is a schematic diagram showing the details of the payload adding and conditioning circuit (unit 630a of figure 2) used for embedding a primary watermark payload

Figure 4 is a schematic diagram illustrating a watermark detector that can be used in one preferred embodiment of the invention;

Figure 5 is a schematic diagram showing the details of watermark generator unit 650 according to a preferred embodiment;

Figure 6 is a diagram illustrating a watermark embedder apparatus according to a preferred embodiment;

Figure 7 shows a signal portion extraction filter $H$;

Figure 8 shows the payload adding/changing and watermark conditioning stage used for re-embedding a watermark;

Figure 9 is a diagram illustrating the details of the watermark conditioning apparatus $H_c$ of figure 8, including charts of the associated signals at each stage;

Figure 10 shows a typical correlation function corresponding to the original payload of a watermark signal received by the apparatus of figure 1 and figure 4;

Figure 11 shows a correlation function after removal of one of the two sequences forming the original watermark; and

Figure 12 shows a correlation function of a new watermark having a new payload, formed by adding a second watermark sequence to the signal having the correlation function shown in figure 10.

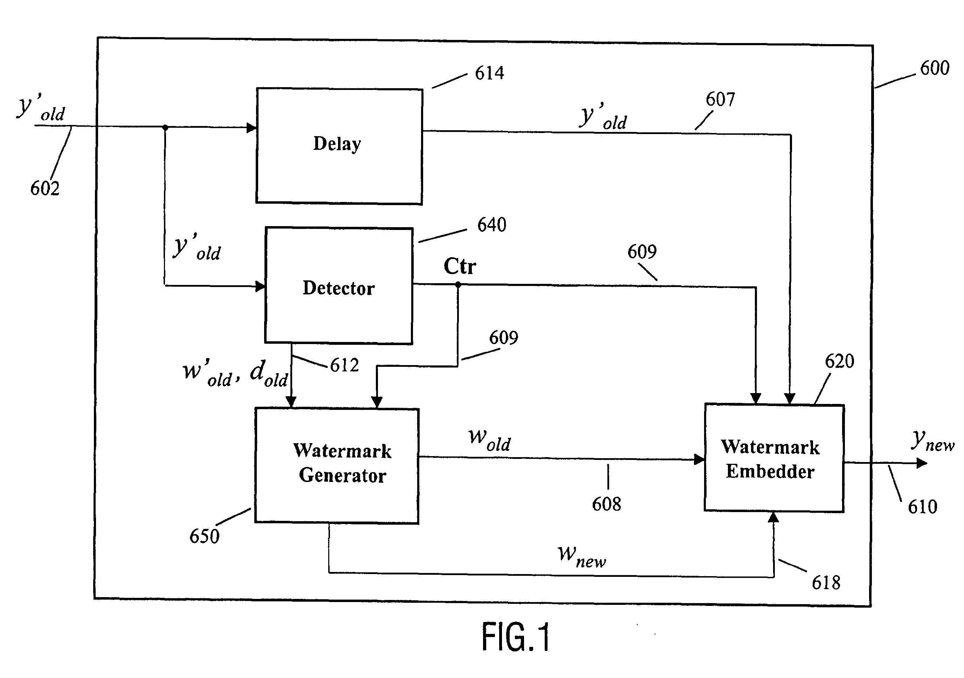

Figure 1 illustrates a re-embedding apparatus 600 according to a first embodiment of the present invention. The apparatus includes an input 602 arranged to receive a watermarked information signal $y'_{old}$. Two copies of the input signal $y'_{old}$ are formed, with one copy going to a delay unit 614, and the other being input to a detector 640.

The detector 640 is arranged to detect an estimate $w'_{old}$ (output 612) of the watermark $w_{old}$ that is embedded within the received signal $y'_{old}$, and to estimate the control parameters (output 609) needed for changing the watermark payload.

Information relating to the detected watermark $w'_{old}$ is then passed to the watermark generator 650 and the watermark embedder 620. The information passed to the watermark generator can be a complete copy of the extracted watermark $w'_{old}$, or alternatively sufficient information (such as, for watermarks comprising two circularly shifted sequences of a single series of values, the circular shift $d_{old}$) to allow the watermark generator to generate a copy $w_{old}$ of $w'_{old}$. The output 608 of the watermark generator, also denoted by $w_{old}$, is preferably an error corrected version of the extracted watermark $w'_{old}$.

The watermark generator 650 additionally generates a new watermark signal $w_{new}$ (output 618), for adding to the original information signal $y'_{old}$.

The delay unit 614 acts to delay the input signal $y'_{old}$ whilst the intervening operations are carried out by the detector 640, and the watermark generator 650. The delayed signal $y'_{old}$ is then passed (output 607) to the embedder 620.

In the watermark embedding unit 620, the old watermark signal $w_{old}$ is removed from the signal $y'_{old}$, and the new watermark $w_{new}$ added to $y'_{old}$ so as to form an information signal $y_{new}$ containing the new watermark $w_{new}$.

The above embodiment represents a particular generalized implementation of the present invention. Below is described a particular watermark re-embedding scheme in accordance with a further embodiment of the present invention for use in conjunction with a particular watermarking scheme.

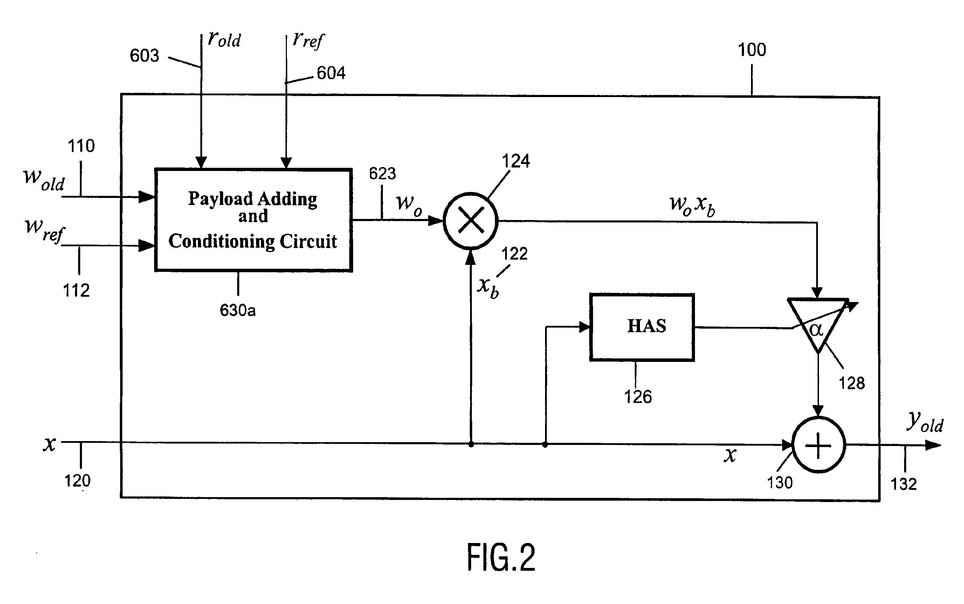

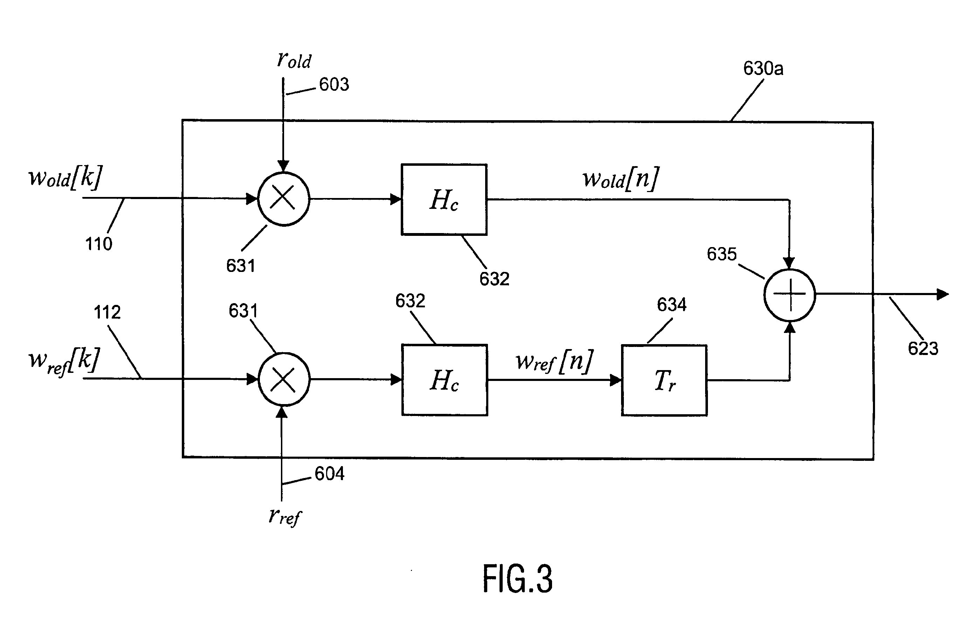

Such a watermark can for example be embedded using the apparatus shown in figures 2 and 3.

Figure 2 shows an embedding apparatus 100 arranged to receive a host multimedia signal x at input 120, and output a watermarked version of the received signal ($y_{old}$) at output 132.

The apparatus 100 receives two sequences of values ($w_{old}[k]$ and $w_{ref}[k]$) at input 110 and 112. The combination of these two sequences of values is used to produce the watermark signal $w_o$. Each of the two sequences of values is a circularly shifted version of an original sequence of values. $W_{old}$ is the original sequence $w_s$ circularly shifted by $d_{old}$, and $w_{ref}$ the original sequence $w_s$ circularly shifted by $d_{ref}$ i.e. $w_{old}$ is hence a circularly shifted version of $w_{ref}$. The original sequence of values can, for instance, be generated using a Random Number Generator (RNG) using a predetermined seed value S.

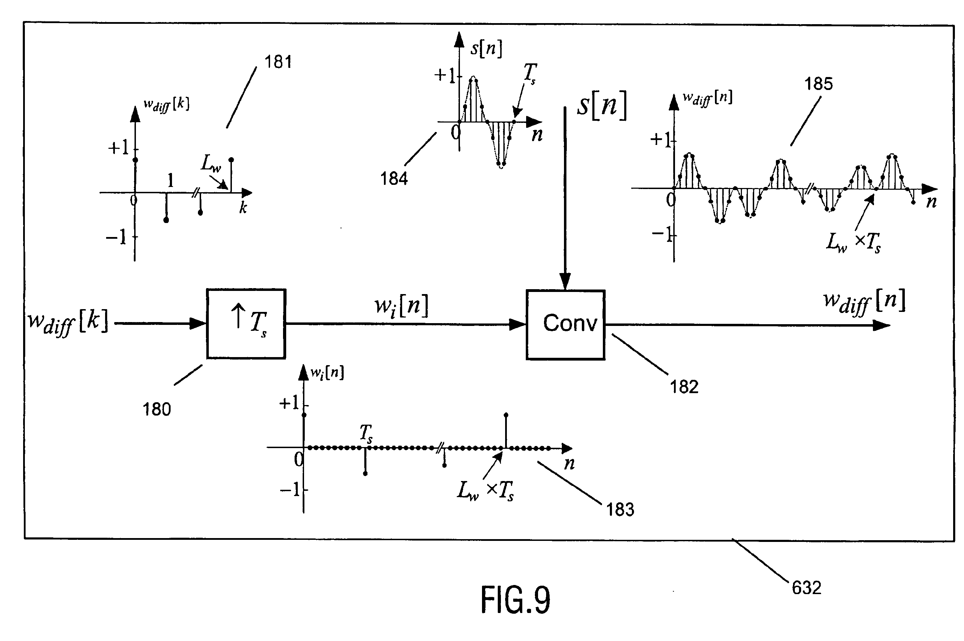

As shown in Figure 3, the payload adding and conditioning circuit 630a receives $w_{old}[k]$ and $w_{ref}[k]$ at respective inputs 110 and 112. Each sequence is multiplied by a respective sign bit $r_{old}$ and $r_{ref}$ (received at inputs 603 and 604) using multipliers 631 (where $r_{old}$ and $r_{ref}$ are respectively +1 or -1, and remain constant for any given payload). The resulting signals are then passed through signal conditioning units 632, which act to convolve each of the values within each sequence with a window shaping function of the period $T_s$. This produces smoothly varying output sequences $w_{old}[n]$ and $w_{ref}[n]$. Operation of a signal conditioning unit 632 is described later in more detail with reference to Figure 9. Signal $w_{ref}[n]$ is then delayed by delay unit 634 by a predetermined delay $T_r$ (where $T_r$ is less than $T_s$, and preferably, $T_r=T_s/4$). Adder 635 then adds $w_{old}[n]$ and the delayed version of $w_{ref}[n]$, the result being the watermark signal $w_o[n]$ which is output from the circuit 630 at output 623.

Referring back to Figure 2, the received host signal x is split into two copies, a first copy going to adder 130, and a second copy going to multiplication unit 124. The copy sent to multiplication unit 124 may be filtered using a band pass filter (not shown) so as to form the signal $x_b$ at input 122 to the multiplier 124.

$W_o[n]$ is multiplied with the possibly filtered version $x_b[n]$ of the host signal $x[n]$, scaled by gain factor $\alpha$ and added back to the host signal $x[n]$ to generate the watermark signal $y_{old}[n]$ given by

$$y_{old}[n] = x[n] + \alpha w_o[n]x_b[n]. \tag{1}$$

The gain factor $\alpha$ is set by the variable gain device 128, and in the example shown is set in dependence upon the signal from the signal analyzer 126 which samples the host signal x using a psychoacoustic model. Such a model is, for instance, described in the paper by E.Zwicker, "Audio Engineering and Psychoacoustics: Matching signals to the final receiver, the Human Auditory System", Journal of the Audio Engineering Society, Vol. 39, pp. Vol.115-126, March 1991. The gain factor $\alpha$ is normally chosen so as to minimize the impact of the watermark signal on the host signal quality.

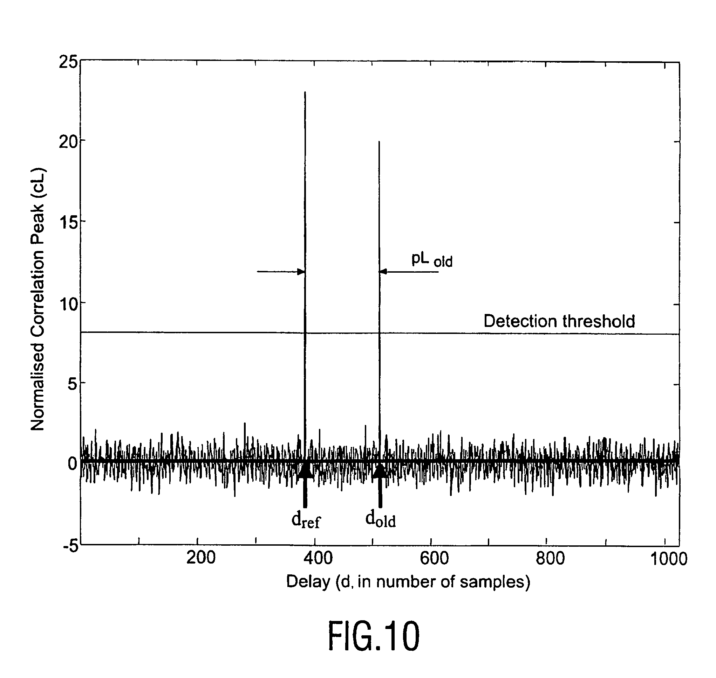

Such a watermarking scheme is **characterized in that,** during detection the watermarked signal $y_{old}$ generates two correlation peaks that are separated by $pL_{old}$ (see figure 10), where the value $pL_{old}$ is at least part of the watermark payload, and may be defined as

$$pL_{old} = \mid d_{ref} - d_{old} \mid \bmod \left( \left\lceil L_w \middle/ 2 \right\rceil \right) \tag{2}$$

where $d_{ref}$ and $d_{old} \in [0, L_w\text{-}1]$ are the relative positions of the correlation peaks as seen in figure 10, and $L_w$ is the length (number of symbols or values) of each of the two watermark sequences.

In addition to $pL_{old}$, extra information is also encoded by changing the relative signs of the embedded watermarks. In the detector, this is seen as a relative sign $r_{sign}$ between the correlation peaks. It will be seen that $r_{sign}$ can take four possible values, and may be defined as:

$$r_{\text{sign}} = \frac{2 \cdot \mu_{ref} + \mu_{old} + 3}{2} \in \{0,1,2,3\}, \tag{3}$$

where $\mu_{old}$ and $\mu_{ref}$ are the signs of the correlation peaks, and correspond to the sign bits $r_{old}$ and $r_{ref}$ in figure 3, respectively. The overall watermark payload $pL_w$ is then given as a combination of $r_{sign}$ and $pL_{old}$:

$$pL_w = \left\langle r_{\text{sign}}, pL_{old} \right\rangle. \tag{4}$$

The maximum information ($I_{max}$), in number of bits, that can be carried by a watermark sequence of length $L_w$ is thus given by:

$$I_{\max} = \log_2 \left( 4 \cdot \left\lceil L_w \middle/ 2 \right\rceil \right) \text{ bits} \tag{5}$$

Below is described a watermark re-embedding apparatus suitable for use in conjunction with the watermark embedder shown in figure 2 and the related watermarking scheme. In this particular embodiment, the embedding apparatus is arranged to only partially remove the watermark, and replaces it with new information so as to change the watermark payload. Figure 1 illustrates the different functional blocks of the re-embedder.

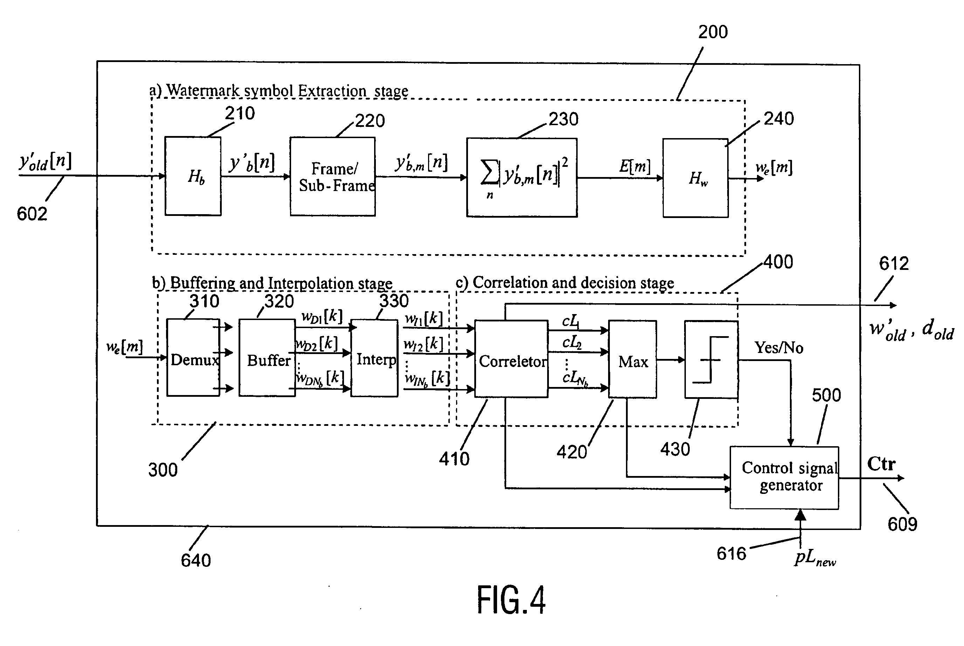

Figure 4 shows a block diagram of a watermark detector 640 used to extract the watermark embedding parameters that are needed for the re-embedding process. The detector consists of four major stages: (a) the watermark symbol extraction stage (200), (b) the buffering and interpolation stage (300), (c) the correlation and decision stage (400) and (d) the control signal generating stage (500).

In the symbol extraction stage (200), the received watermarked signal $y'_{old}[n]$ is processed to generate multiple ($N_b$) estimates of the watermarked sequence, which are multiplexed into the signal $w_e[m]$. These estimates of the watermark sequence are required to resolve (compensate for) any time offset that may exist between the embedder and the detector, so that the watermark detector can synchronize to the watermark sequence inserted in the host signal.

In the buffering and interpolation stage (300), these estimates are de-multiplexed into $N_b$ separate buffers. An interpolation is subsequently applied to each buffer to resolve (compensate for) possible timescale modifications that may have occurred. For instance, a drift in sampling (clock) frequency may result in a stretch or shrink in the time domain signal (i.e. the watermark may have been stretched or shrunk).

In the correlation and decision stage (400), the content of each buffer is correlated with the reference watermark and the maximum correlation peaks are compared against a threshold to determine the likelihood of whether the watermark is indeed embedded within the received signal $y'_{old}[n]$.

In the control signal generating unit (500), the detection truth value, the corresponding watermark sequence, its buffer index, and the value of the new payload $pL_{new}$ (input 616) are combined to generate parameters that are needed to changing the watermark payload. The outputs (609, 612) of the control signal generator are passed on to the watermark generator 650 and the watermark embedding unit 620.

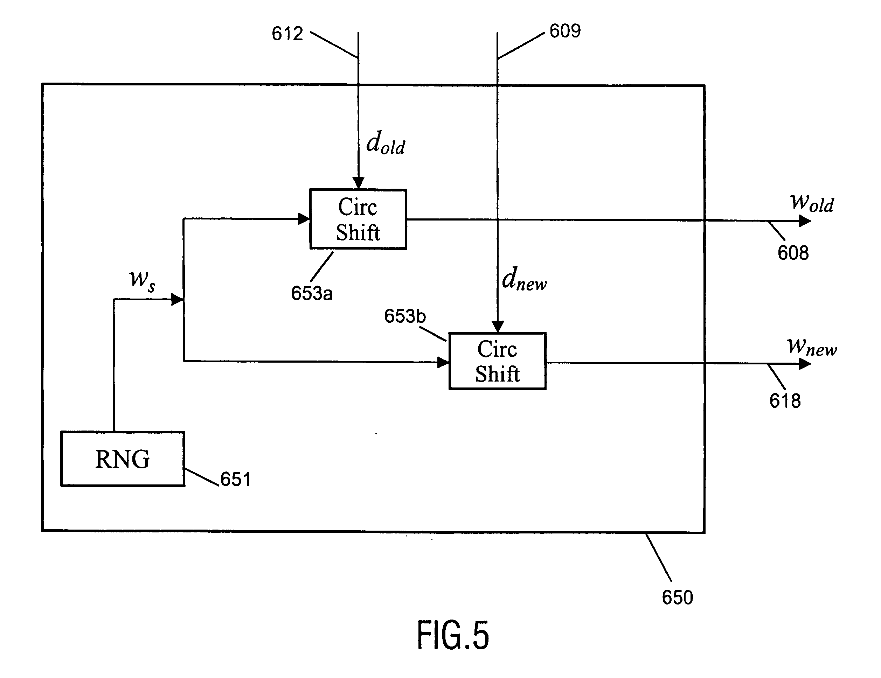

Details of the watermark generating unit 650 are shown in figure 5. In this unit, $w_{new}$ and $w_{old}$ are generated using parameter information obtained from the detector 640 (inputs 609 and 612).

In one preferred embodiment, the watermark sequences $w_{old}$ and $w_{new}$ can be generated as follows. Firstly a finite length, preferably zero mean and uniformly distributed random sequence $w_s$ is generated using a random number generator 651 with an initial seed $S$. It will be appreciated that this initial seed S is preferably the same as that used in generating $w_{old}$ during the first embedding. This results in the sequence of length $L_w$

$$w_s[k] \in [-1,1], \text{ for } k=0,1,2, ..., L_w-1 \tag{6}$$

Then the sequence $w_s$ is circularly shifted by the amounts $d_{old}$ and $d_{new}$ using the circularly shifting units 653a and 653b to obtain the random sequences $w_{old}$ and $w_{new}$, respectively. It will be appreciated that these two sequences ($w_{old}$ and $w_{new}$) are effectively a first sequence and a second sequence, with the second sequence being circularly shifted with respect to the first. These two sequences are then passed on to the watermark embedding unit 620 (outputs 608, 618).

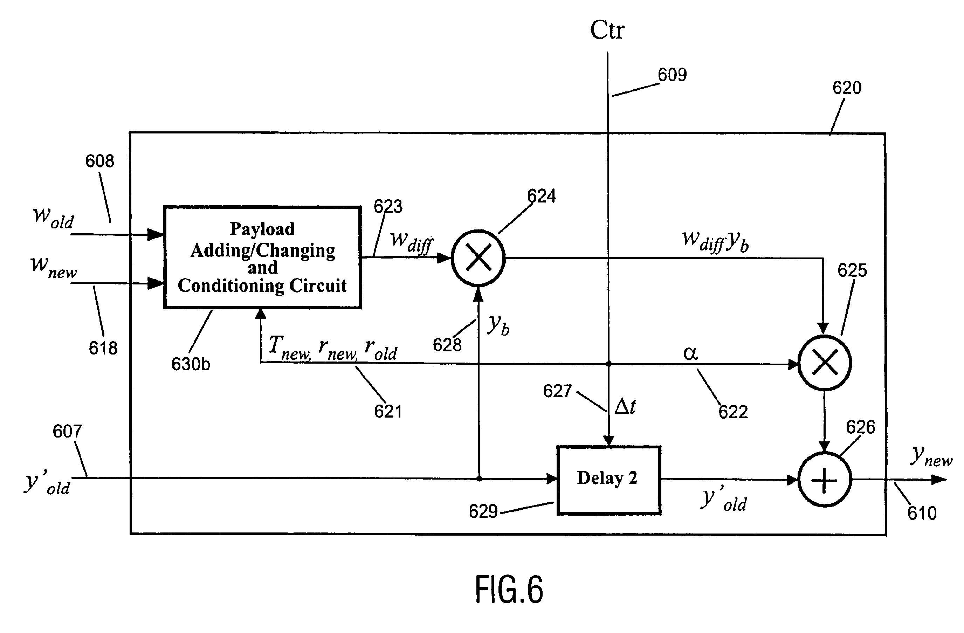

Details of a watermark embedding unit 620 as part of the watermark re-embedding apparatus 600, and suitable for use with the considered particular watermarking scheme, is shown in figure 6.

The host signal $y'_{old}$ (containing at least an initial watermark sequence $w_{old}$) is provided at input 607 of the apparatus. The host signal $y'_{old}$ is passed in the direction of output 610 via the delay unit 629 and the adder 626. However, a replica $y_b$ of the host signal $y'_{old}$ (input 628) is split off in the direction of the multiplier 624, for carrying the new watermark information.

The multiplier 624 is utilized to calculate the product of the watermark altering signal $w_{diff}$ and the replica signal $y_b$. The watermark altering signal $w_{diff}$ is obtained from the payload changing and watermark conditioning apparatus 630b, and derived from the watermark random sequences $w_{old}$ and $w_{new}$ (inputs 608 and 618, respectively), which are input to the payload changing and watermark conditioning apparatus.

The resulting product, $w_{diff}y_b$ is then passed via a gain controller 625 to the adder 626. The gain factor $\alpha$ applied by the controller 625 controls the trade off between the audibility and the robustness of the watermark. It may be a constant, or variable in at least one of time, frequency and space. The apparatus in figure 6 shows that, when $\alpha$ is variable, it can be automatically adapted via a control signal 609 obtained from the watermark detector unit 640.

In another preferred embodiment, the gain factor $\alpha$ can be independently controlled via a signal analyzer based upon the properties of the host signal $y_{old}$. In the latter case, the gain $\alpha$ is automatically adapted, preferably so as to minimize the impact on the signal quality, according to a properly chosen perceptibility cost-function, such as a psychoacoustic model of the human auditory system (HAS). The same model may be used as that utilized to control the adaptive gain factor used to control the embedding strength of the original watermark signal (see Figure 2 and associated text).

In Figure 6, the resulting watermark audio signal $y_{new}$ is then obtained at the output 610 of the embedding apparatus 620 by adding an appropriately scaled version of the product of $w_{diff}$ and $y_b$ to the host signal:

$$y_{new}[n] = y_{old}[n] + \alpha w_{diff}[n]y_b[n] \approx x[n] + \alpha w_c[n]x_b[n], \tag{7}$$

where $w_c$ is derived from $w_{ref}$ and $k_{new}$ in the same way as $w_o$ was derived from $w_{ref}$ and $w_{old}$ in figure 3.

Preferably, the parameters of the watermark $w_{diff}[n]$ are chosen such that when multiplied with $y_b$, it predominantly modifies the short time envelope of $y_b$.

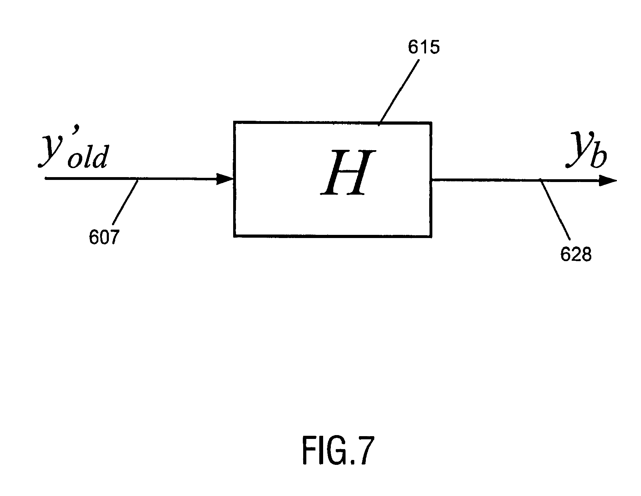

Figure 7 shows one preferred embodiment in which the input 628 to the multiplier 624 in figure 6 is obtained by filtering the host signal $y'_{old}$ using a filter $H$ in the filtering unit 615. Preferably, the filter $H$ is a linear phase band-pass filter characterized by its lower cut off frequency $f_L$ and upper cut off frequency $f_H$. Preferably, the filter has the same properties as the filter utilized to extract $x_b$ from $x$ in the embedder 100.

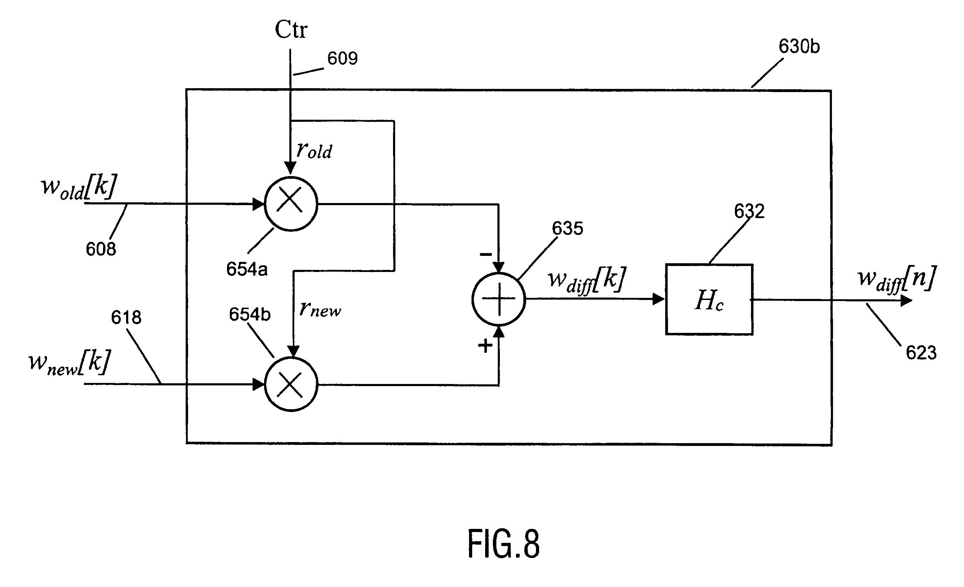

In figure 8, the details of the payload changing and watermark-conditioning unit 630b are shown. In this particular unit, the watermark signals $w_{old}$ and $w_{new}$ are combined to generate the multi-bit watermark altering signal $w_{diff}$. The watermark altering signal $w_{diff}$, when combined with $y'_{old}$, generates a watermarked signal with a payload corresponding to $w_{new}$.

The sequences $w_{old}$ and $k_{new}$ are first multiplied with a respective sign bit $r_{old}$ and $r_{new}$ in the multiplying units 654a and 654b. The respective values of $r_{old}$ and $r_{new}$ are derived from the detection unit 640 and are passed on via the control input 609. The values of $r_{old}$ and $r_{new}$ remain constant (typically at either +1 or-1), and only change when the payload of the watermark is changed.

The difference $w_{diff}[k]$ between the signed sequences $w_{old}$ and $w_{new}$ is calculated using adder 635 to add the negative of the old watermark sequence $w_{old}$ to the positive of the new sequence $w_{new}$. The result $w_{diff}$ is then passed through the conditioning stage to generate the slowly varying multi-bit watermark $w_{diff}[n]$.

Figure 9 shows details of the watermark conditioning apparatus 632 used in the payload adding/changing and watermark conditioning apparatus 630. In the case of re-embedding, the watermark random sequence $w_{diff} = w_{new}-w_{old}$ is input to the conditioning apparatus 632.

In the conditioning circuit, the watermark signal sequence $w_{diff}[k]$ is first applied to the input of an up-sampler 180. Chart 181 illustrates one of the possible sequences $w_{diff}$ as a sequence of values of random numbers between +1 and -1, with the sequence being of length $L_w$. The up-sampler adds ($T_s-1$) zeros between each sample so as to raise the sampling frequency by the factor $T_s$. $T_s$ is referred to as the watermark symbol period and represents the span of the watermark symbol in the audio signal. In the case of the received signal $y'_{old}$ having undergone a time scaling compared with the transmitted signal $y_{old}$, $T_s$ is replaced with appropriately scaled sampling factor $T_{new}$ that takes into account the scaling effect. Chart 183 shows the results of the signal illustrated in chart 181 once it has passed through the up-sampler 180.

A window shaping function $s[n]$, such as a bi-phase window, is then convolved with the up-sampled signal $w_i[n]$ so as to convert it into a slowly varying narrowband signal $w_{diff}[n]$, whose behavior for the $w_{diff}[k]$ sequence of chart 181 is as shown in chart 185.

Chart 184 shows a typical bi-phase window shaping function. The window shaping function has support in the interval 0 to $T_s$ only. The window function is applied to the watermark sequence in order to produce a smoothly varying signal, so as to minimize the decrease in the quality of the host signal.

Below is described in more detail the operation of the detection apparatus (200, 300, 400, 500) shown in figure 4.

In the watermark symbol extraction stage 200 shown in figure 4, the incoming watermark signal $y'_{old}[n]$ is input to the signal conditioning filter $H_b(210)$. This filter 210 is typically a band pass filter and has the same behavior as the corresponding filter $H (615)$ shown in figure 7. The output of the filter $H_b$ is $y'_b[n]$, and assuming linearity within the transmission channel, it follows from equation (1)

$$y'_b[n] \approx (1 + \alpha w_c[n])x_b[n] \tag{8}$$

Note that when no filter is used in the embedder (i.e., when $H=1$) then $H_b$ in the detector can also be omitted, or it can still be included to improve the detection performance. If $H_b$ is omitted, then $y'_b$ in equation (8) is replaced with $y'_{old}$. The rest of the processing is the same.

For simplification, it is assumed that there is perfect synchronism between the embedder and the detector (i.e. no offset and no change in timescale), and that the audio signal is divided into frames of length $T_s$, and that $y'_{b,m}[n]$ is the *n-th* sample of the *m-th* frame of the filtered signal $y'_b[n]$. It should be noted that if there is not perfect synchronism between the embedder and the detector, then any deviation can be compensated for within the buffering and interpolation stage 300 utilizing techniques known to the skilled person e.g. iteratively searching through all possible scale and offset modifications until a best match is achieved.

The energy $E[m]$ corresponding to the $y'_{b,m}[n]$ frame is:

$$E[m] = \sum_{n=0}^{T_s-1} \left| y'_{b,m}[n]S[n] \right|^2 \tag{9}$$

where $S[n]$ is the same window shaping function used in the watermark conditioning circuit of figure 9. A person skilled in the art will appreciate that equation 9 represents a matched filter receiver, and is the optimum receiver when the symbol period is perfectly synchronized. Not withstanding this fact, from now on, we set $S[n]=1$ in order to simplify subsequent explanations.

Combining this with equation 8, it follows that:

$$E[m] = \sum_{n=0}^{T_s-1} \left| y'_{b,m}[n] \right|^2 \approx \sum_{n=0}^{T_s-1} \left| (1 + \alpha w_e[m])x_{b,m}[n] \right|^2 \tag{10}$$

where $w_e[m]$ is the *m-th* extracted watermark symbol. and contains $N_b$ time-multiplexed estimates of the embedded watermark sequences. Solving for $w_e[m]$ in equation 10 and ignoring higher order terms of $\alpha$, gives the following approximation:

$$w_e[m] \approx \frac{1}{2\alpha}\left( \frac{\sum_{n=0}^{T_s-1}\left|y'_{b,m}[n]\right|^2}{\sum_{n=0}^{T_s-1}\left|x_{b,m}[n]\right|^2} - 1 \right) \tag{11}$$

In the watermark extraction stage 200 shown in figure 4, the output $y'_b[n]$ of the filter $H_b$ is provided as an input to a frame divider 220, which divides the audio signal into frames of length $T_s$ i.e. into $y'_{b,m}[n]$, with the energy calculating unit 230 then being used to calculate the energy corresponding to each of the framed signals as per equation (9). The output of this energy calculation unit 230 is then provided as an input to the whitening stage $H_w$ (240) which performs the function shown in equation 11 so as to provide an output $w_e[m]$.

It will be realized that the denominator of equation 11 contains a term that requires knowledge of the host (original) signal $x$. As the signal $x$ is not available to the detector, it means that in order to calculate $w_e[m]$ then the denominator of equation 11 must be estimated.

Below is described how such an estimation can be achieved for a bi-phase window shaping function, but it will be appreciated that the teaching could be extended to other window shaping functions.

It will be seen by examination of the bi-phase window function shown in figure 9 (chart 184), that when the envelope of an audio frame is modulated with such a window function, the first and the second halves of the frame are scaled in opposite directions. In the detector, this property is utilized to estimate the envelope energy of the host signal $y'_{old}$.

Consequently, within the detector, the audio frame is first sub-divided into two halves. The energy functions corresponding to the first and second half frames are hence given by

$$E_1[m] = \sum_{n=0}^{T_s/2-1}\left|y'_{b,m}[n]\right|^2 \tag{12}$$

and

$$E_2[m] = \sum_{n=T_s/2}^{T_s-1}\left|y'_{b,m}[n]\right|^2 \tag{13}$$

respectively. As the envelope of the original audio is modulated in opposite directions within the two sub-frames, the original audio envelope can be approximated as the mean of $E_1[m]$ and $E_2[m]$.

Further, the instantaneous modulation value can be taken as the difference between these two functions. Thus, for the bi-phase window function, the watermark $w_e[m]$ can be approximated by:

$$w_e[m] \approx \frac{1}{2\alpha}\left( \frac{E_1[m] - E_2[m]}{E_1[m] + E_2[m]} - 1 \right) \tag{14}$$

This output $w_e[m]$ is then passed to the buffering and interpolation stage 300, where the signal is de-multiplexed by a de-multiplexer 310, buffered in buffers 320 of length $L_b$ so as to resolve any lack of synchronism between the embedder and the detector, and interpolated within the interpolation unit 330 so as to compensate for any time scale modification between the embedder and the detector. Such compensation can utilize known techniques, and hence is not described in any more detail within this specification.

During detection, in order to maximize the accuracy of the watermark detection, the watermark detection process is typically carried out over a length of received signal $y'_{old}[n]$ that is 3 to 4 times that of the watermark sequence length. Thus each watermark symbol to be detected can be constructed by taking the averages of several symbols. This averaging process is referred to as smoothing, and the number of times the averaging is done is referred to as the smoothing factor $s_f$. Thus, the detection window length $L_D$ is the length of the audio segment (in number of samples) over which a watermark detection truth-value is reported. Consequently, $L_D = s_f L_w T_s$, where $T_s$ is the symbol period and $L_w$ the number of symbols within the watermark sequence. Typically, the length ($L_b$) of each buffer 320 within the buffering and interpolation stage is $L_b = s_f L_w$.

As shown in figure 4, outputs $(w_{D1}, w_{D2}, ... w_{DNb})$ from the buffering stage are passed to the interpolation stage and, after interpolation, the outputs $(w_{I1}, w_{I2}, ... w_{INb})$ of this stage, which correspond to the different estimates of the correctly re-scaled signal, are passed to the correlation and decision stage. If it is believed that no time scaling compensation is required, the values $(w_{D1}, w_{D2}, ... w_{DNb})$ can be passed directly to the correlation and decision stage 400 i.e. the interpolation stage 330 can be omitted from the apparatus.

The correlator 410 calculates the correlation of each estimate $w_{Ij}$, $j=1, ..., N_b$ with respect to the reference watermark sequence $w_s[k]$. Each respective correlation output corresponding to each estimate is then applied to the maximum detection unit 420 which determines which two estimates provided the best fits for the circularly shifted versions $w_{old}$ and $w_{ref}$ of the reference watermark. The correlation values (the peak amplitudes and positions) for these estimate sequences are passed to the threshold detector and payload extractor unit 430.

In another output of the correlation stage 410, the watermark sequences and the buffer indices corresponding to the two best fits for the circularly shifted versions $w_{old}$ and $w_{ref}$ of the reference watermark are passed on to the control signal generating unit 500.

If the interpolation stage is omitted, alternatively the correlator 410 calculates the correlation of each estimate $w_{Dj}$, $j=1,...,N_b$ with the reference watermark sequence $w_s[k]$ and the results are passed on for subsequent processing to the units 420 and 430 as outlined in the above paragraph.

The threshold detector and payload extractor unit 430 may be utilized to extract the payload (e.g. information content) from the detected watermark signal. Once the unit has estimated the two correlation peaks $cL_1$ and $cL_2$ that exceed the detection threshold, the distance $pL$ between the peaks (as defined by equation (2)) is measured. Next, the signs $\mu_1$ and $\mu_2$ of the correlation peaks are determined, and hence $r_{sign}$ calculated from equation (3). The overall watermark payload may then be calculated using equation (4).

For instance, it can be seen in Figure 10 that $pL_{old}$ is the relative distance between the two peaks. Both peaks are positive i.e. $\mu_1 = +1$, and $\mu_2 = +1$. From equation (3), $r_{sign} = 3$. Consequently, the payload $pL_w = <3, pL_{old}>$.

The reference watermark sequence $w_s$ used within the detector corresponds to (a possibly circularly shifted version of) the original watermark sequence applied to the host signal. For instance, if the watermark signal was calculated using a random number generator with seed S within the embedder, then equally the detector can calculate the same random number sequence using the same random number generation algorithm and the same initial seed so as to determine the watermark signal. Alternatively, the watermark signal originally applied in the embedder and utilized by the detector as a reference could simply be any predetermined sequence.

Figure 10 shows a typical shape of a correlation function as output from the correlator 410. The horizontal scale shows the correlation delay (in terms of the sequence bins). The vertical scale on the left-hand side (referred to as the confidence level $cL$) represents the value of the correlation peak normalized with respect to the standard deviation of the (typically normally distributed) correlation function.

As can be seen, the typical correlation is relatively flat with respect to $cL$, and centered about $cL = 0$. However, the function contains two peaks, which are separated by $pL_{old}$ (see equation 2) and extend upwards to $cL$ values that are above the detection threshold when a watermark is present. When the correlation peaks are negative, the above statement applies to their absolute values.

A horizontal line represents the detection threshold. The detection threshold value controls the false alarm rate.

Two kinds of false alarms exist: the false positive rate, defined as the probability of detecting a watermark in non watermarked items, and the false negative rate, which is defined as the probability of not detecting a watermark in watermarked items. Generally, the requirement of the false positive alarm is more stringent than that of the false negative.

After each detection interval, the detector determines whether the original watermark is present or whether it is not present, and on this basis output a "yes" or a "no" decision to the outputting device and at the same time to the control signal generating unit 500.

If desired, to improve this decision making process, a number of detection windows may be considered. In such an instance, the false positive probability is a combination of the individual probabilities for each detection window considered, dependent upon the desired criteria. For instance, it could be determined that if the correlation function has two peaks above a threshold of $cL = 7$ on any two out of three detection intervals, then the watermark is deemed to be present. Obviously, such detection criteria can be altered depending upon the desired use of the watermark signal and to take into account factors such as the original quality of the host signal and how badly the signal is likely to be corrupted during normal transmission.

In summary of the general operation of this particular re-embedding process, the re-embedding apparatus 600 is arranged to receive a signal $y'_{old}$ containing a watermark at input 602. The signal $y'_{old}$ in this instance has been generated by the watermark embedding apparatus shown in figures 2 and 3, and includes a watermark comprising two circularly shifted versions $w_{old}$ and $w_{ref}$ of a single sequence $w_s$ of values. A copy of the received signal $y_{old}$ is passed to the detector 640.

As described above, the detector 640 is arranged to detect the presence of the watermark within the signal $y'_{old}$, and to estimate the watermark embedding parameters (e.g. the amounts d by which the watermark sequences were circularly shifted, and the gain factor $\alpha$ used to control the trade off between the audibility and the robustness of the watermark).

Figure 10 illustrates a correlation function of the watermark embedded within $y'_{old}$, with the original sequence of values ($w_s$) used to form $w_{old}$. As can be seen, the payload $pL_{old}$ of the watermark in $y'_{old}$ is, at least in part, defined by the two amounts by which the sequences comprising the watermark have been circularly shifted, $d_{old}$ and $d_{ref}$.

In this preferred embodiment, only a portion of the original watermark signal is removed (the sequence of values which have been circularly shifted by the amount $d_{old}$). The same sequence of values ($w_s$) as utilised in the original watermark is then circularly shifted by a new amount ($d_{new}$), and embedded within the information signal, using the detected embedding parameters.

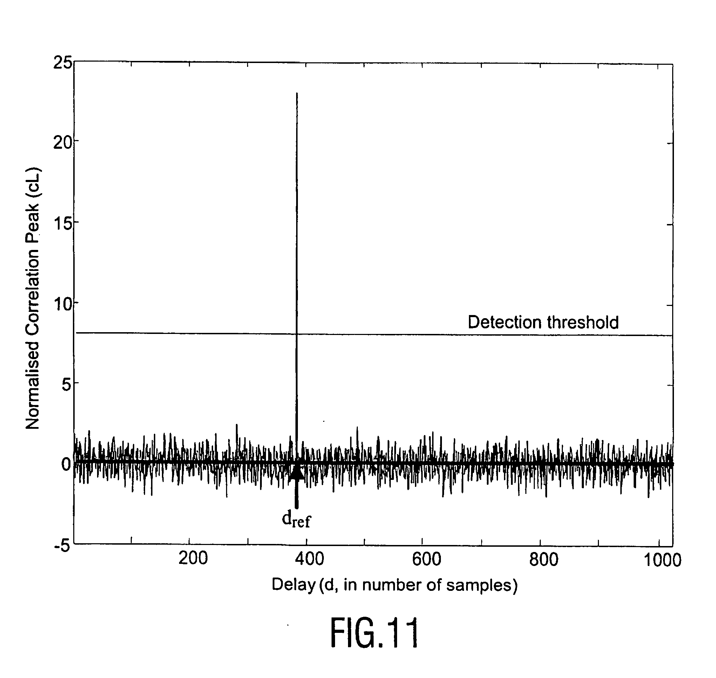

Figure 11 illustrates a correlation function of the same watermark signal shown in figure 10, but in which the sequence of values corresponding to delay $d_{old}$ has been removed (i.e. as if "-$w_{old}$" had been added to $y'_{old}$). The result is a single correlation peak at $d_{ref}$.

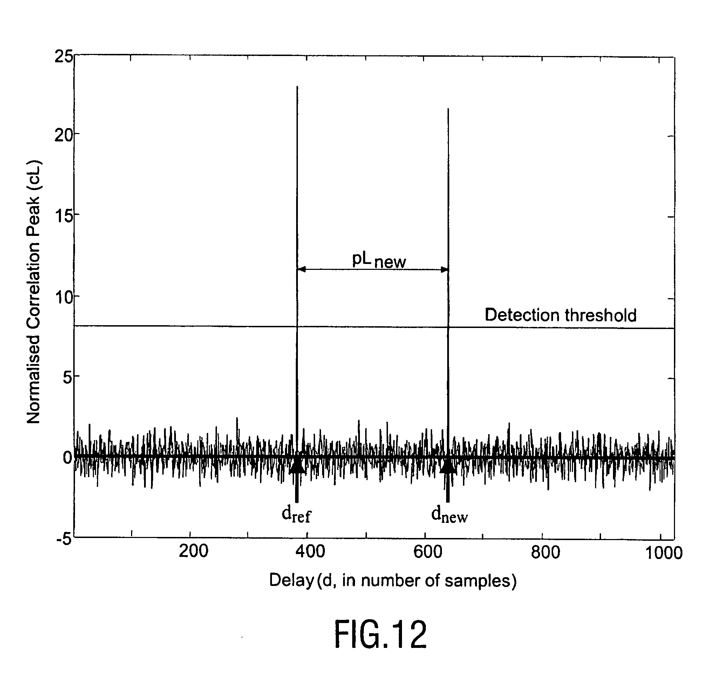

Figure 12 shows the correlation function of the same signal shown in Figure 10, but after the same sequence of values $w_s$ with a new circular shift delay ($d_{rew}$) has been inserted. This results in two correlation peaks, separated by a payload $pL_{new}$ (see equation 2 and 4) i.e. a new watermark signal. It will be appreciated that by only removing one half of the original watermark signal, and subsequently adding in a replacement half of the watermark signal, a new watermark has been generated but with minimum impact upon the quality of the information signal into which the watermark is embedded.

The detector 640 also provides synchronization information such as the time offset ($\Delta t$) to a delay unit 629. The copy of the input signal $y'_{old}$ passed to the delay unit 629 is then appropriately synchronized to take into account any time offsets, rescaling and also the intrinsic delay caused by the various operations carried out by the units in the re-embedder (e.g. 630b, 624, 625, 615), and to ensure that $y'_{old}$ is synchronized with $y_b$ at the adder 626. One copy of the signal $y'_{old}$ is passed to the filter $H$ 615. This is similar to the filter shown in figure 7, and can be omitted. Such a filter, can for instance, be a band-pass filter, and gives an output $y_b$.

It will be appreciated that the above embodiments are provided by way of example only. Various modifications will be apparent to the skilled person.

For instance, whilst the preferred embodiment has described the partial removal of the original watermark, it will be appreciated that the whole of the original watermark could be removed and replaced. Equally, whilst only one sequence has been described as being removed and replaced by one sequence, it will be appreciated that a single sequence could be replaced by two or more sequences. Alternatively if the original payload comprised three circularly shifted sequences or more, two such sequences could be replaced by a single sequence, or a plurality of sequences.

Whilst the new watermark has been described as utilizing the same values of embedding parameters as originally used, the new watermark could of course use alternative values for any one of more of the embedding parameters.

For instance, whilst the above embodiment has described the watermark altering signal $w_c$ as being scaled by a factor $\alpha$, it will be appreciated that the two components forming $w_c$ (ie. $w_{old}$ and $w_{new}$) could be scaled by different amounts before being added together, or before being separately added directly to the received signal $y'_{old}$. In order for the portion of the watermark to be removed, it is desirable that the embedding strength of the negative version of $w_{old}$ is similar to that originally used to embed $w_{old}$ in the host signal. However, $w_{new}$ can obviously be embedded into $y'_{old}$ with any desired strength.

It is desirable that watermarks are embedded into the host signal without unduly affecting the quality of the host signal. Preferably, all embedded watermark signals are imperceptible to an observer i.e. in an audio signal, the effect of the watermark signal can not be heard, or in a video signal, the effect of the watermark signal can not be seen.

The ITU standard "Method for objective Measurements of Perceived audio quality", International Telecommunication Union, Geneva Switzerland (1999), defines a five grid scoring system (which is in conformation to ITU-R Rec BS.1116 (rev. 1) (1997) and ITU-R Rec. BS.562-3 (1990) standards). The various scores are: 5 = Imperceptible, 4= Perceptible but not annoying, 3 = Slightly annoying, 2 = Annoying, 1 = Very annoying.

Whilst it is preferable that all watermark signals are imperceptible, equally, a scoring of 4 on the ITU scale ("perceptible but not annoying") is acceptable in most systems.

Whilst the above embodiment describes the implementation of the present invention with respect to one particular watermarking scheme, it will be appreciated that the invention can in fact be implemented using many other types of watermarking schemes.

For instance, one type of audio watermarking scheme is to use temporal correlation techniques to embed the desired data (e.g. copyright information) into the audio signal.

This technique is effectively an echo-hiding algorithm, in which the strength of the echo is determined by solving a quadratic equation. The quadratic equation is generated by auto-correlation values at two positions: one at delay equal to $\tau$, and one at delay equal to 0. In such a scheme, as echoes of the audio signal are added to the original audio signal, the resulting signal is in fact both an amplitude and a phase modulated version of the original audio signal. At the detector, the watermark is extracted by determining the ratio of the auto correlation function at the two delay positions.

Also known are watermarking schemes based on the amplitude modulation of DFT (Discrete Fourier Transform) co-efficients, that require the calculation of DFT's at both the encoder and the decoder.

Similarly, WO 98/53565, US 6,175,627 and WO 00/00969 describe alternative techniques, to which the present invention could be applied, for embedding or encoding auxiliary signals (such as copyright information) into a multimedia host or cover signal. As detailed in WO 00/00969, a replica of the cover signal, or a portion of the cover signal in a particular domain (time, frequency or space), is generated according to a stego key, which specifies modification values to the parameters of the cover signal. The replica signal is then modified by an auxiliary signal corresponding to the information to be embedded, and inserted back into the cover signal so as to form the stego signal.

At the decoder, in order to extract the original auxiliary data, a replica of the stego signal is generated in the same manner as the replica of the original cover signal, and requires the use of the same stego key. The resulting replica is then correlated with the received stego signal, so as to extract the auxiliary signal.

Using an alternative embodiment of the present invention, the extracted auxiliary signal can be replaced by a new one. This can be achieved by appropriately subtracting the auxiliary information from the received signal using the stego key and the embedding parameters estimated using the detection unit. In relation to figure 1, this can be put into effect by utilizing a detector 640, a watermark generator 650, and a watermark re-embedder 620 responsive to the underlying embedding algorithm.

It will be appreciated by the skilled person that various implementations not specifically described would be understood as falling within the scope of the present invention. For instance, whilst only the functionality of the embedding and detecting apparatus has been described, it will be appreciated that the apparatus could be realized as a digital circuit, an analog circuit, a computer program, or a combination thereof.

Within the specification it will be appreciated that the word "comprising" does not exclude other elements or steps, that "a" or "an" does not exclude a plurality, and that a single processor or other unit may fulfil the functions of several means recited in the claims.

**Claims**

**1.** A method of processing a multimedia signal comprising an original watermark signal, the watermark signal comprising at least two sequences of values ($w_{old}$,$w_{ref}$) formed from a single sequence ($w_s$) of values, the method comprising the steps of:

> determining a value ($d_{old}$) of at least one of the parameters used to embed a respective one of said sequences of the original watermark,
> removing one of said sequences of the original watermark signal utilizing said value of said parameter ($d_{old}$),
> adding a new at least one sequence ($w_{new}$) of values to the multimedia signal so as to form a new watermarked multimedia signal;
>
> wherein said new at least one sequence of values together with said remaining at least one sequence form a new watermark signal.

**2.** A method as claimed in claim 1, wherein all of said sequences of values are formed from a single sequence of values which has been circularly shifted by different amounts.

**3.** A method as claimed in claim 1, wherein said parameter comprises at least one of: synchronization information, time offset, time-scaling, an amount of a circular shift of a sequence, and a watermark symbol period.

**4.** A method as claimed in claim 1, wherein said removed portion of the watermark signal was embedded with a predetermined strength into said multimedia signal, the method comprising the step of embedding the new signal into the multimedia signal with preferably the same predetermined strength.

**5.** A method as claimed in claim 4, wherein the embedding strength is such that the degradation in the quality of the new watermarked multimedia signal is perceptible but not annoying.

**6.** A method as claimed in claim 1, wherein at least one of the original watermark signal and the new watermark signal comprises a smoothly varying signal formed by applying a window shaping function to a sequence of values, the integral over the window shaping function being zero.

**7.** A method as claimed in claim 6, wherein the window shaping function has a bi-phase behavior.

**8.** A method as claimed in claim 7, wherein the bi-phase window comprises at least two Hanning windows of opposite polarities.

**9.** A computer program arranged to perform the method of claim 1.

**10.** A record carrier comprising a computer program as claimed in claim 9.

**11.** An apparatus for processing a multimedia signal comprising an original watermark signal, the watermark signal comprising at least two sequences of values ($w_{old}$,$w_{ref}$) formed from a single sequence ($w_s$) of values, the apparatus comprising:

a detector arranged to detect a value ($d_{old}$) of at least one of the parameters used to embed a respective one of said sequences of the original watermark,
a deletion unit arrange to remove at least one of said sequences of the original watermark signal utilizing said value of said parameter ($d_{old}$), and
an embedder arranged to add a new at least one sequence of values to the multimedia signal;

wherein said new at least one sequence of values together with said remaining at least one sequence form a new watermark signal.

**12.** A receiver of a multimedia signal comprising an apparatus as claimed in claim 11.

**Patentansprüche**

**1.** Verfahren zur Verarbeitung eines Multimediasignals mit einem ursprünglichen Wasserzeichensignal, wobei dieses Wasserzeichensignal wenigstens zwei Wertfolgen ($w_{old}$, $w_{ref}$) aufweist, die aus einer einzigen Folge ($w_s$) von Werten gebildet ist,
wobei das Verfahren die nachfolgenden Verfahrensschritte umfasst:

- das Ermitteln eines Wertes ($d_{old}$) wenigstens eines der Parameter, die zum Einbetten einer betreffenden Folge der genannten Folgen des ursprünglichen Wasserzeichens verwendet werden,
- das Entfernen einer der genannten Folgen des ursprünglichen Wasserzeichensignals unter Anwendung des genannten Wertes des genannten Parameters ($d_{old}$),
- das Hinzufügen wenigstens einer neuen Folge ($w_{new}$) von Werten zu dem Multimediasignal, zur Bildung eines neuen mit einem Wasserzeichen versehenen Multimediasignals,

wobei die genannte neue wenigstens eine Folge von Werten zusammen mit der genannten restlichen wenigstens einen Folge ein neues Wasserzeichensignal bilden.

**2.** Verfahren nach Anspruch 1, wobei alle genannten Wertfolgen aus einer einzigen Wertfolge gebildet werden, die um verschiedene Beträge zyklisch verschoben worden ist.

**3.** Verfahren nach Anspruch 1, wobei der genannte Parameter wenigstens Folgendes umfasst: Synchronisationsinformation, Zeitversatz, Zeitskalierung, einen Betrag einer zyklischen Verschiebung einer Folge oder eine Wasserzeichensymbolperiode.

**4.** Verfahren nach Anspruch 1, wobei der genannte entfernte Teil des Wasserzeichensignals mit einer vorbestimmten Stärke in das genannte Multimediasignal eingebettet wurde, wobei das Verfahren den Verfahrensschritt der Einbettung des neuen Signals mit vorzugsweise der gleichen vorbestimmten Stärke in das Multimediasignal umfasst.

**5.** Verfahren nach Anspruch 4, wobei die Einbettungsstärke derart ist, dass die Verringerung der Qualität des neuen mit einem Wasserzeichen versehenen Multimediasignals zwar wahrnehmbar, nicht aber belästigend ist.

6. Verfahren nach Anspruch 1, wobei wenigstens das ursprüngliche Wasserzeichensignal oder das neue Wasserzeichensignal ein problemlos variierendes Signal aufweist, das **dadurch** gebildet worden ist, dass eine Fensterformungsfunktion zu einer Wertfolge hinzugefügt wird, wobei das Integral über die Fensterformungsfunktion Null ist.

7. Verfahren nach Anspruch 6, wobei die Fensterformungsfunktion ein Doppelphasenverhalten aufweist.

8. Verfahren nach Anspruch 7, wobei das Doppelphasenfenster wenigstens zwei Hanning-Fenster entgegengesetzter Polarität aufweist.

9. Computerprogramm, vorgesehen zum Durchführen des Verfahrens nach Anspruch 1.

10. Aufzeichnungsträger mit einem Computerprogramm nach Anspruch 9.

11. Anordnung zum Verarbeiten eines Multimediasignals mit einem ursprünglichen Wasserzeichensignal, wobei das Wasserzeichensignal wenigstens zwei Wertfolgen ($w_{old}$, $w_{ref}$) aufweist, gebildet aus einer einzigen Folge ($w_s$) von Werten, wobei die Anordnung Folgendes umfasst:

- einen Detektor zum Detektieren eines Wertes ($d_{old}$) wenigstens eines der Parameter, die zum Einbetten einer betreffenden Folge der genannten Folgen des ursprünglichen Wasserzeichens verwendet werden,
- eine Löscheinheit zum Entfernen wenigstens einer der genannten Folgen des ursprünglichen Wasserzeichensignals unter Anwendung des genannten Wertes des genannten Parameters ($d_{old}$), und
- eine Einbettungsanordnung zum Hinzufügen wenigstens einer neuen Folge von Werten zu dem Multimediasignal, wobei die genannte neue wenigstens eine Wertfolge zusammen mit der genannten restlichen wenigstens einen Folge ein neues Wasserzeichensignal bildet.

12. Empfänger eines Multimediasignals mit einer Anordnung nach Anspruch 11.

## Revendications

1. Procédé de traitement d'un signal multimédia comprenant un signal de filigrane d'origine, le signal de filigrane comprenant au moins deux séquences de valeurs ($w_{old}$, $w_{ref}$) formées à partir d'une seule séquence ($w_s$) de valeurs, le procédé comprenant les étapes consistant à :

déterminer une valeur ($d_{old}$) d'au moins l'un des paramètres utilisé pour incorporer l'une respective desdites séquences du filigrane d'origine,
supprimer l'une desdites séquences du signal de filigrane d'origine en utilisant ladite valeur dudit paramètre ($d_{old}$),
ajouter au moins une nouvelle séquence ($w_{new}$) de valeurs au signal multimédia de manière à former un nouveau signal multimédia filigrané ;

dans lequel ladite au moins une nouvelle séquence de valeurs avec ladite au moins une séquence restante forment un nouveau signal de filigrane.

2. Procédé selon la revendication 1, dans lequel toutes lesdites séquences de valeurs sont formées à partir d'une séquence unique de valeurs qui a été déplacée circulairement de différentes quantités.

3. Procédé selon la revendication 1, dans lequel ledit paramètre comprend au moins l'un de : informations de synchronisation, décalage de temps, mise à l'échelle de temps, une quantité de déplacement circulaire d'une séquence, et une période de symbole de filigrane.

4. Procédé selon la revendication 1, dans lequel ladite portion supprimée du signal de filigrane a été incorporée avec une force prédéterminée au dit signal multimédia, le procédé comprenant l'étape consistant à incorporer le nouveau signal au signal multimédia avec de préférence la même force prédéterminée.

5. Procédé selon la revendication 4, dans lequel la force d'incorporation est telle que la dégradation de la qualité du nouveau signal multimédia filigrané est perceptible mais pas gênante.

**6.** Procédé selon la revendication 1, dans lequel au moins l'un du signal de filigrane d'origine et du nouveau signal de filigrane comprend un signal variant régulièrement formé en appliquant une fonction de mise en forme de fenêtre à une séquence de valeurs, l'intégrale de la fonction de mise en forme de fenêtre étant égale à zéro.

**7.** Procédé selon la revendication 6, dans lequel la fonction de mise en forme de fenêtre a un comportement biphasé.

**8.** Procédé selon la revendication 7, dans lequel la fenêtre biphasée comprend au moins deux fenêtres de Hanning de polarités opposées.

**9.** Programme informatique agencé pour effectuer le procédé de la revendication 1.

**10.** Support d'enregistrement comprenant un programme informatique selon la revendication 9.

**11.** Appareil de traitement d'un signal multimédia comprenant un signal de filigrane d'origine, le signal de filigrane comprenant au moins deux séquences de valeurs ($w_{old}$, $w_{ref}$) formées à partir d'une seule séquence ($w_s$) de valeurs, l'appareil comprenant :

un détecteur agencé pour détecter une valeur ($d_{old}$) d'au moins l'un des paramètres utilisé pour incorporer l'une respective desdites séquences du filigrane d'origine,
une unité de suppression agencée pour supprimer au moins l'une desdites séquences du signal de filigrane d'origine en utilisant ladite valeur dudit paramètre ($d_{old}$), et
un incorporateur agencé pour ajouter au moins une nouvelle séquence de valeurs au signal multimédia ;

dans lequel ladite au moins une nouvelle séquence de valeurs avec ladite au moins une séquence restante forment un nouveau signal de filigrane.

**12.** Récepteur d'un signal multimédia comprenant un appareil selon la revendication 11.

FIG.1

FIG.2

FIG.3

FIG.4

EP 1 514 268 B1

FIG.5

EP 1 514 268 B1

FIG.6

EP 1 514 268 B1

$$y'_{old} \xrightarrow{\quad 607 \quad} \boxed{H}^{\;615} \xrightarrow{\quad} y_b \quad 628$$

FIG.7

FIG.8

EP 1 514 268 B1

FIG.9

EP 1 514 268 B1

FIG.10

EP 1 514 268 B1

FIG.11

FIG.12

EP 1 514 268 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020149976 A
- WO 0225662 A
- EP 1148408 A
- WO 9853565 A
- US 6175627 B
- WO 0000969 A

### Non-patent literature cited in the description

- **PIVA et al.** Managing Copyright in Open Networks. *IEEE Internet Computing,* May 2002, vol. 6 (3), 18-26
- **VAN DER VEEN et al.** *Robust Multi-functional and High Quality Audio Watermarking Technology,* 12 May 2001, vol. 110 (5345
- **E.ZWICKER.** Audio Engineering and Psychoacoustics: Matching signals to the final receiver, the Human Auditory System. *Journal of the Audio Engineering Society,* March 1991, vol. 39, 115-126